# EUROPÄISCHE PATENTSCHRIFT

(11) **EP 2 331 377 B1**
(45) Veröffentlichungstag und Bekanntmachung des Hinweises auf die Patenterteilung: **08.04.2020**
(21) Anmeldenummer: 09778587.7
(22) Anmeldetag: 17.09.2009
(51) Int. Cl.: B60T 13/68, B60T 17/04

(54) **FESTSTELLBREMSANLAGE**
PARKING BRAKE SYSTEM
SYSTÈME DE FREINAGE DE STATIONNEMENT

(30) Priorität: 17.09.2008 DE 102008047632
(43) Veröffentlichungstag der Anmeldung: 15.06.2011
(73) Patentinhaber: KNORR-BREMSE Systeme für Nutzfahrzeuge GmbH, 80809 München (DE)
(72) Erfinder: HILBERER, Eduard, 68766 Hockenheim (DE); HERGES, Michael, 80935 München (DE); SZELL, Peter, H-1163 Budapest (HU)
(74) Vertreter: Schönmann, Kurt
(86) Internationale Anmeldenummer: PCT/EP2009/006732
(87) Internationale Veröffentlichungsnummer: WO 2010/031563

(56) Entgegenhaltungen:
- DE-A1-102006 041 009
- DE-A1-102006 041 011

## Beschreibung

Die Erfindung betrifft eine Feststellbremsanlage für ein Fahrzeug, mit einer zumindest teilweise bistabil ausgeführten Ventileinrichtung zur Erzeugung eines Steuerdrucks zum Vorsteuern zumindest einer Funktion der Feststellbremsanlage und einem Relaisventil, das den Steuerdruck der Ventileinrichtung empfängt und in Abhängigkeit von dem Steuerdruck zumindest einen Federspeicherzylinder be- oder entlüftet.

Gattungsgemäße Feststellbremsanlagen sind insbesondere im Nutzfahrzeugbereich weit verbreitet, wo oftmals als Ergänzung zu einer druckluftbetriebenen Betriebsbremse eine druckluftbetriebene Feststellbremsanlage vorgesehen ist. Derartige Feststellbremsanlagen umfassen üblicherweise eine Ventileinrichtung, die mehrere Einzelventile umfassen kann, die beispielsweise elektrisch ansteuerbar sein können und verschiedene Steuerdrücke erzeugen, und ein Relaisventil, welches in Abhängigkeit von einem der Steuerdrücke die Federspeicherzylinder be- oder entlüftet. Um die Montage aller Komponenten zu erleichtern, werden alle Bestandteile der Feststellbremsanlage in einer einzigen Baugruppe, einem so genannten Feststellbremsmodul, zusammengefasst, wobei aus Platz- und Effizienzgründen eine Integration des Feststellbremsmoduls in die Druckluftaufbereitungsanlage nicht unüblich ist.

Die DE 10 2006 041 011 A1 offenbart eine Ventileinheit für eine elektropneumatische Bremssteuerungseinrichtung zur Steuerung einer Feststellbremse eines Fahrzeugs.

Nachteilig bei einem derartig hohen Integrationsgrad von Druckluftaufbereitungsanlage und Feststellbremsmodul ist der hohe Arbeitsaufwand, der zur Instandsetzung nach einem Defektfall notwendig ist.

Der Erfindung liegt daher die Aufgabe zugrunde dieses Problem zumindest teilweise zu lösen.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die Erfindung baut auf der gattungsgemäßen Feststellbremsanlage dadurch auf, dass die Ventileinrichtung in ein erstes in eine Druckluftaufbereitungsanlage integriertes Modul integriert ist und dass das Relaisventil in einem zweiten Modul angeordnet ist, das mit Abstand zum ersten Modul und der Druckluftaufbereitungsanlage angeordnet ist. Durch die Auftrennung der Feststellbremsanlage beziehungsweise des Feststellbremsmoduls in zwei separate Module, wobei ein erstes Modul in die Druckluftaufbereitungsanlage integriert wird und ein zweites Modul mit Abstand zum ersten Modul und der Druckluftaufbereitungsanlage angeordnet wird, ist eine leichte Austauschbarkeit zumindest des zweiten Moduls, das nicht in die Druckluftaufbereitungsanlage integriert ist, gewährleistet. Auf diese Weise ist ein Austausch insbesondere des Relaisventils, das hohen Belastungen ausgesetzt ist, ohne zusätzlichen Montageaufwand möglich.

Vorteilhafterweise ist vorgesehen, dass das erste Modul einen Anhängersteueranschluss umfasst, der von einem Magnetventil zum Ausführen einer Testfunktion einer Anhängerfeststellbremse ansteuerbar ist. Zur Erzeugung eines Steuerdrucks an dem Steueranschluss wird üblicherweise nur ein geringes Luftvolumen benötigt, weshalb die Belastung der ihn erzeugenden Ventile gering ist. Eine Integration in die Druckluftaufbereitungsanlage durch Anordnen des betroffenen Magnetventils in dem ersten Modul ist daher von Vorteil.

Besonders bevorzugt ist, dass das Magnetventil pulsweitenmoduliert ansteuerbar ist, um eine Streckbremsfunktion an dem Anhängersteueranschluss bereitzustellen. Die pulsweitenmodulierte Ansteuerbarkeit erlaubt eine kontinuierliche Druckmodulation an dem Anhängersteueranschluss, wodurch eine stufbare Bremswirkung der Anhängerfeststellbremse realisierbar ist. Dies ermöglicht wiederum ein von der Betriebsbremse unabhängiges Einbremsen des Fahrzeugs mit angeschlossenem Anhänger.

Denkbar ist, dass ein in das erste Modul integrierter Drucksensor zur Druckregelung einer Anhängersteuerung vorgesehen ist. Das Schließen des Druckregelkreises durch einen in das erste Modul integrierten Drucksensor erlaubt die Überwachung des an dem Anhängersteueranschluss anliegenden Steuerdrucks mit geringem Aufwand.

Insbesondere kann vorgesehen sein, dass die zumindest teilweise bistabil ausgeführte Ventileinrichtung ein bistabiles Magnetventil umfasst, um ein unerwünschtes Schließen oder Öffnen der Feststellbremse im Defektfall zu vermeiden. Dies erhöht die Fahrzeugsicherheit im Allgemeinen, da ein plötzliches Öffnen der Feststellbremsanlage bei einem stehenden Fahrzeug genauso ausgeschlossen wird wie ein plötzliches Schließen der Feststellbremsanlage bei einem fahrenden Fahrzeug.

Die Erfindung wird nun mit Bezug auf die begleitenden Zeichnungen anhand bevorzugter Ausführungsformen beispielhaft erläutert.

Es zeigen:
- Figur 1: eine erste Ausführungsform einer Feststellbremsanlage;
- Figur 2: eine zweite Ausführungsform einer Feststellbremsanlage und
- Figur 3: ein Fahrzeug mit einer erfindungsgemäßen Feststellbremsanlage.

In den folgenden Zeichnungen bezeichnen gleiche Bezugszeichen gleiche oder gleichartige Teile.

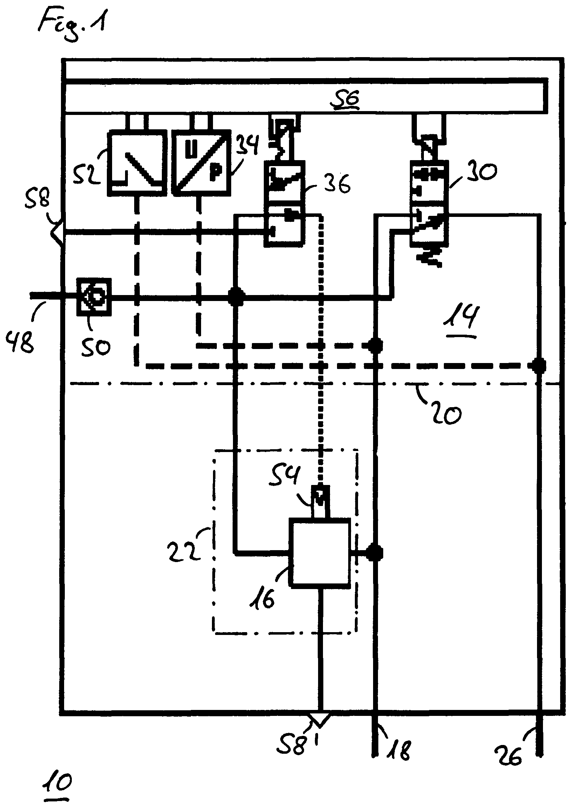

Figur 1 zeigt eine erste Ausführungsform einer Feststellbremsanlage. Die dargestellte Feststellbremsanlage 10 ist in ein erstes Modul 20 und ein mit Abstand zum ersten Modul 20 angeordnetes zweites Modul 22 unterteilt. Das erste Modul 20 umfasst eine Ventileinrichtung 14 und ein Steuergerät 56 während in dem zweiten Modul 22 ein Relaisventil 16 angeordnet ist. Das in dem zweiten Modul 22 angeordnete Relaisventil 16 ist über Druckleitungen mit der in dem ersten Modul 20 angeordneten Ventileinrichtung 14 gekoppelt, wobei über eine Leitung ein Versorgungsdruck zuführbar ist. Über eine Druckversorgung 48 wird stromabwärts von einem Rückschlagventil 50 ein bistabiles Magnetventil 36, das Teil der Ventileinrichtung 14 ist, mit einem Versorgungsdruck beaufschlagt. Das bistabile Magnetventil 36 ist von dem Steuergerät 56 ansteuerbar und beaufschlagt einen Steuereingang 54 des Relaisventils 16 in seiner dargestellten Schaltposition mit dem Versorgungsdruck. Ein stromabwärts des Relaisventils 16 angeschlossener Federspeicherbremszylinder 18 ist daher in der dargestellten Schaltposition des bistabilen Magnetventils 36 belüftet, weshalb die Feststellbremsanlage 10 geöffnet ist. Der in dem Federspeicherbremszylinder 18 herrschende Druck kann über einen Drucksensor 34 detektiert werden. Ein Magnetventil 30 ist unabhängig von dem bistabilen Magnetventil 36 mit der Druckversorgung 48 gekoppelt und erzeugt an einem Anhängersteueranschluss 26 in seiner dargestellten Schaltposition einen nicht verschwindenden Anhängersteuerdruck. Das Magnetventil 30 kann verschieden ausgelegt sein und auch pulsweitenmoduliert ansteuerbar sein. Über einen Druckschalter 52 ist der an dem Anhängersteueranschluss anliegende Steuerdruck detektierbar. Wird das bistabile Magnetventil 36 in seinen nicht dargestellten Schaltzustand überführt, so wird der Steuereingang 54 über eine Entlüftung 58 entlüftet, woraufhin auch der Federspeicherbremszylinder 18 über eine Entlüftung 58' entlüftet wird. In diesem Schaltzustand ist die Feststellbremse des Fahrzeugs geschlossen, während unabhängig davon noch ein Anhängersteuerdruck an dem Anhängersteueranschluss 26 erzeugt wird. Wird auch das Magnetventil 30 in seinen nicht dargestellten Schaltzustand überführt, so wird der Anhängersteueranschluss 26 ebenfalls über die Entlüftung 58' entlüftet. Zwischen dem bistabilen Magnetventil 36 und dem Relaisventil 16 kann ein nicht dargestelltes 2/2-Wegeventil in der Steuerleitung angeordnet sein, das als Halteventil den Druck an dem Steuereingang 54 des Relaisventils 16 unabhängig vom Schaltzustand des bistabilen Magnetventils 36 hält. Eine Testfunktion, das heißt das unabhängige Betätigen der Feststellbremse von Zugfahrzeug und einem angekoppelten Anhänger ist möglich, da die Steuerdrücke an den Ausgängen 18 und 26 nicht nur gemeinsam erzeugbar sind.

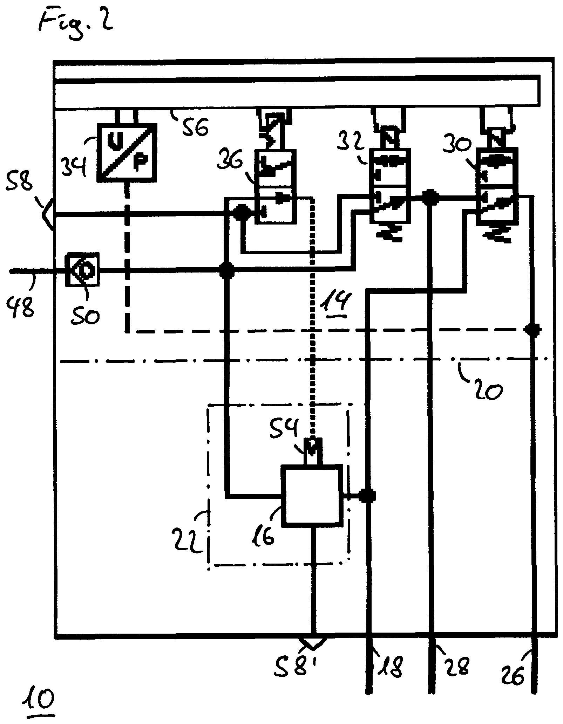

Figur 2 zeigt eine zweite Ausführungsform einer Feststellbremsanlage. Die in Figur 2 dargestellte Feststellbremsanlage 10 ist gegenüber der aus Figur 1 bekannten Feststellbremsanlage durch Hinzufügen eines weiteren Magnetventils 32 zur Ventileinrichtung 14 modifiziert. Das weitere Magnetventil 32 ist zwischen dem Magnetventil 30 und der Druckversorgung 48 angeordnet und versorgt einen weiteren Anhängersteueranschluss 28 mit einem Anhängersteuerdruck. Bei der Feststellbremsanlage 10 gemäß Figur 2 wird wahlweise entweder der Anhängersteueranschluss 26 oder der weitere Anhängersteueranschluss 28 verwendet. Wird der Anhängersteueranschluss 26 verwendet, so arbeitet die Feststellbremsanlage 10 vergleichbar mit derjenigen gemäß Figur 1. Die Ansteuerung des hier nicht dargestellten Anhängersteuermoduls über den Anhängersteueranschluss 26 erfolgt im dargestellten Schaltzustand der Ventileinrichtung 30 in Abhängigkeit der Ansteuerung des Relaisventils 16 durch das bistabile Magnetventil 36. Auch hier ist eine Testfunktion durch das Magnetventil 30 realisierbar, da das Magnetventil 30 über das weitere Magnetventil 32 in dessen dargestellten Schaltzustand direkt mit der Druckversorgung 48 koppelbar ist. Auch an dem weiteren Anhängersteueranschluss 28 ist eine Testfunktion möglich, da der bereitgestellte Steuerdruck von der Be- beziehungsweise Entlüftung des Federspeicherbremszylinders 18 entkoppelt ist.

Die Feststellbremsanlage 10 gemäß Figur 2 ist somit im Hinblick auf die Kundenwünsche besonders flexibel anpassbar. Wünscht ein Fahrzeughersteller eine an die Ansteuerung des Relaisventils 16 gekoppelte Ansteuerung des Anhängersteuermoduls, so wird der Anhängersteueranschluss 26 zur Verfügung gestellt, während der weitere Anhängersteueranschluss 28 verschlossen ist, entweder durch einen Verschlussstopfen, oder dadurch, dass der entsprechende Luftkanal bei der Fertigung nicht in das erste Modul 20 eingebracht wird. Wird umgekehrt gewünscht, die Entlüftung des Anhängersteuermoduls 10 unabhängig von der entlüftenden Stellung des Relaisventils 16 zur Verfügung zu stellen, wird der weitere Anhängersteueranschluss 28 zur Verfügung gestellt, während der Anhängersteueranschluss 26 dann nicht benötigt wird. Insbesondere kann hierdurch auch den Kundenwünschen nach gebremstem Anhänger im Parkzustand beziehungsweise ungebremstem Anhänger im Parkzustand Rechnung getragen werden, nämlich je nachdem, welcher Anhängersteueranschluss 26, 28 verwendet wird.

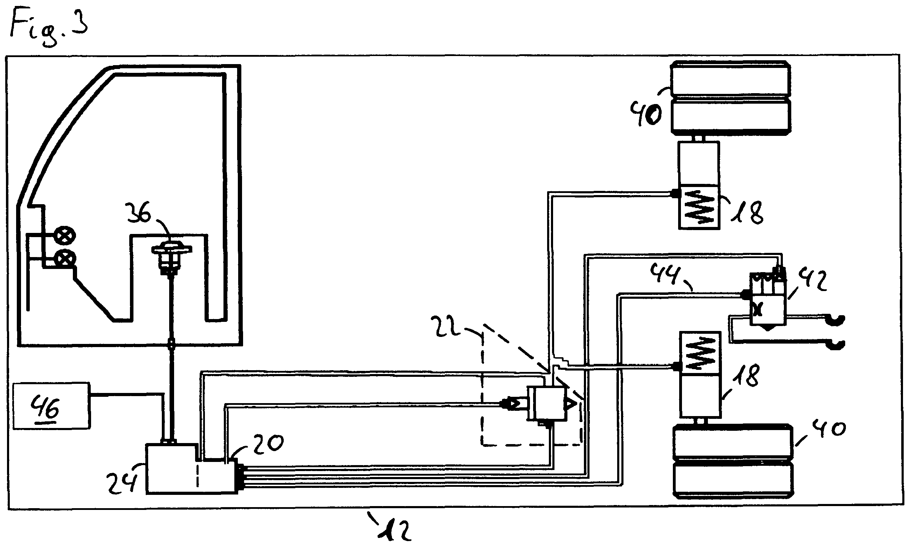

Figur 3 zeigt ein Fahrzeug mit einer erfindungsgemäßen Feststellbremsanlage. Das in Figur 3 dargestellte Fahrzeug 12 ist nur schematisch zur Veranschaulichung der Lage wichtiger Bestandteile der Feststellbremsanlage innerhalb des Fahrzeugs 12 angedeutet. Ein erstes Modul 20 ist in eine Druckluftversorgungsanlage 24 integriert, die zur Erhöhung der Verfügbarkeit redundant mit einer Stromversorgung 46 gekoppelt ist. Weiterhin ist die Druckluftversorgungsanlage 24 mit einer Handsteuereinheit 38 zur Detektion von Fahrerwünschen gekoppelt. Die Druckluftversorgungsanlage 24 beziehungsweise das erste Modul 20 verfügt über einen Anhängersteueranschluss 26, 28 und eine Druckversorgung 44 für ein Anhängersteuermodul 42 mit welchem es über Druckleitungen gekoppelt ist. Weiterhin verfügt die Druckluftversorgungsanlage 24 beziehungsweise das erste Modul 20 über Anschlüsse für ein im Abstand zum ersten Modul 20 und der Druckluftversorgungsanlage 24 angeordneten zweiten Modul 22, das insbesondere das aus den Figuren 1 und 2 bekannte Relaisventils 16 umfasst. Über das zweite Modul 22 werden an Rädern 40 angeordnete Federspeicherbremszylinder 18 zum Öffnen und Schließen der Feststellbremsanlage be- und entlüftet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Feststellbremsanlage
- 12: Fahrzeug
- 14: Ventileinrichtung
- 16: Relaisventil
- 18: Federspeicherbremszylinder
- 20: erstes Modul
- 22: zweites Modul
- 24: Druckluftversorgungsanlage
- 26: Anhängersteueranschluss
- 28: weiterer Anhängersteueranschluss
- 30: Magnetventil
- 32: weiteres Magnetventil
- 34: Drucksensor
- 36: bistabiles Magnetventil
- 38: Handsteuereinheit
- 40: Rad
- 42: Anhängersteuermodul
- 44: Druckversorgung
- 46: Stromversorgung
- 48: Druckversorgung
- 50: Rückschlagventil
- 52: Druckschalter
- 54: Steuereingang
- 56: Steuergerät
- 58: Entlüftung
- 58': Entlüftung

## Patentansprüche

1. Feststellbremsanlage (10) für ein Fahrzeug (12), mit
einem in eine Druckluftaufbereitungsanlage (24) integrierten ersten Modul (20), das eine zumindest teilweise bistabil ausgeführte Ventileinrichtung (14) zur Erzeugung eines Steuerdrucks zum Vorsteuern zumindest einer Funktion der Feststellbremsanlage (10) und einen ersten Anhängersteueranschluss (26) aufweist, der von einem ersten Magnetventil (30) zum Ausführen einer Testfunktion einer Anhängerfeststellbremse ansteuerbar ist, und
einem zweiten Modul (22), das mit Abstand zum ersten Modul (20) und der Druckluftautbereitungsanlage (24) angeordnet ist, **dadurch gekennzeichnet, dass** in dem zweiten Modul (22) ein Relaisventil (16) angeordnet ist, das den Steuerdruck der Ventileinrichtung (14) im ersten Modul (20) empfängt und an eine Entlüftung (58') angeschlossen ist, über die in Abhängigkeit von dem Steuerdruck zumindest ein Federspeicherzylinder (18) eines Zugfahrzeugs des Fahrzeugs und in Abhängigkeit von einem Schaltzustand des ersten Magnetventils (30) der erste Anhängersteueranschluss (26) entlüftet werden können.

2. Feststellbremsanlage (10) nach Anspruch 1, **dadurch gekennzeichnet, dass** das erste Modul (20) einen zweiten Anhängersteueranschluss (28) umfasst, der von einem zweiten Magnetventil (32) zum Ausführen einer Testfunktion der Anhängerfeststellbremse ansteuerbar ist, wobei der zweite Anhängersteueranschluss (28) unabhängig von der entlüftenden Stellung des Relaisventils (16) entlüftet werden kann.

3. Feststellbremsanlage (10) nach Anspruch 2, **dadurch gekennzeichnet, dass** sowohl das erste als auch das zweite Magnetventil (30, 32) pulsweitenmoduliert ansteuerbar sind, um eine Streckbremsfunktion an dem jeweiligen Anhängersteueranschluss (26 , 28) bereitzustellen.

4. Feststellbremsanlage (10) nach einem der vorhergehenden Ansprüche, **dadurch gekennzeichnet, dass** ein in das erste Modul (20) integrierter Drucksensor (34) zur Druckregelung einer Anhängersteuerung (28) vorgesehen ist.

5. Feststellbremsanlage (10) nach einem der vorhergehenden Ansprüche, **dadurch gekennzeichnet, dass** die zumindest teilweise bistabil ausgeführte Ventileinrichtung (14) ein bistabiles Magnetventil (36) umfasst, um ein unerwünschtes Schließen oder Öffnen der Feststellbremse im Defektfall zu vermeiden.

## Claims

1. Parking brake system (10) for a vehicle (12), comprising
a first module (20) integrated in a compressed-air supply system (24), which module comprises a valve device (14) of at least partially bi-stable design for producing a control pressure for the pilot control of at least one function of the parking brake system (10) and a first trailer control connection (26), which can be controlled by a first solenoid valve (30) for carrying out a test function of a trailer parking brake, and a second module (22) which is arranged a distance away from the first module (20) and from the compressed-air supply system (24), **characterised in that** in the second module (22) there is arranged a relay valve (16) which receives the control pressure from the valve device (14) in the first module (20) and which is connected to a vent (58'), by way of which, as a function of the control pressure, at least one spring-type cylinder (18) of a tractor vehicle of the vehicle and as a function of a switching condition of the first solenoid valve (30), the first trailer control connection (26) can be vented.

2. Parking brake system (10) according to Claim 1, **characterised in that** the first module (20) comprises a second trailer control connection (28), which can be controlled by a second solenoid valve (32) for carrying out a test function of the trailer parking brake, wherein the second trailer control connection (28) can be vented independently of the venting position of the relay valve (16).

3. Parking brake system (10) according to Claim 2, **characterised in that** both the first and the second solenoid valve (30, 32) can be controlled by pulse width modulation, in order to provide an anti-jack-knife braking function at the respective trailer control connection (26, 28).

4. Parking brake system (10) according to any of the preceding claims, **characterised in that** a pressure sensor (34) integrated in the first module (20) is provided in order to regulate the pressure of a trailer control system (28).

5. Parking brake system (10) according to any of the preceding claims, **characterised in that** the valve device (14) of at least partially bi-stable design comprises a bi-stable solenoid valve (36), in order to avoid an undesired application or release of the parking brake in the event of a fault.

## Revendications

1. Système (10) de frein de stationnement d'un véhicule (12), comprenant
un premier module (20), qui est intégré à un système (24) de traitement d'air comprimé et qui a un dispositif (14) de soupape réalisé de manière bistable, au moins en partie, pour produire une pression de commande, afin de piloter au moins une fonction du système (10) de frein de stationnement, et un premier raccord (26) de commande de remorque, qui peut être commandé par une électrovanne (30), afin de réaliser une fonction de test d'un frein de stationnement de remorque, et
un deuxième module (22), qui est disposé à distance du premier module (20) et du système (24) de traitement d'air comprimé, **caractérisé en ce que**, dans le deuxième module (22), est disposée une vanne relais (16), qui reçoit la pression de commande du dispositif (14) de soupape dans le premier module (20) et est raccordée à une purge (58'), par laquelle, en fonction de la pression de commande, au moins un cylindre (18) à ressort accumulateur d'un véhicule tracteur du véhicule et, en fonction d'un état de commutation de la première électrovanne (30), le premier raccord (26) de commande de remorque peuvent être purgés.

2. Système (10) de frein de stationnement suivant la revendication 1, **caractérisé en ce que** le premier module (20) comprend un deuxième raccord (28) de commande de remorque, qui peut être commandé par une deuxième électrovanne (32), afin de réaliser une fonction de test du frein de stationnement de remorque, le deuxième raccord (28) de commande de remorque pouvant être purgé indépendamment de la position de purge de la vanne relais (16).

3. Système (10) de frein de stationnement suivant la revendication 2, **caractérisé en ce que**, tant la première qu'également la deuxième électrovanne (30, 32) peuvent être commandées d'une manière modulée en largeur d'impulsions, afin de disposer d'une fonction de frein de maintien en ligne sur le raccord (26, 28) de commande de remorque respectif.

4. Système (10) de frein de stationnement suivant l'une des revendications précédentes, **caractérisé en ce qu'**il est prévu un capteur (34) de pression intégré au premier module (20), afin de réguler la pression d'une commande (28) de remorque.

5. Système (10) de frein de stationnement suivant l'une des revendications précédentes, **caractérisé en ce que** le dispositif (14) de soupape réalisé de manière bistable, au moins en partie, comprend une électrovanne (36) bistable, afin d'empêcher une fermeture ou une ouverture intempestive du frein de stationnement en cas de défaut.
